# EUROPEAN PATENT APPLICATION

(11) **EP 1 629 723 A1**
(43) Date of publication of application: **01.03.2006**
(21) Application number: 05107492.0
(22) Date of filing: 16.08.2005
(51) Int. Cl.: A23L 1/10, A23L 1/30, A23L 1/308, A23L 1/20, A23L 1/212, A23L 2/39

(54) **A functional food and use thereof**

(30) Priority: 25.08.2004 FI 20041114
(71) Applicant: Oriola, OY, 02200 Espoo (FI)
(72) Inventor: Kaurala, Marita, FI-02200, Espoo (FI); Adlercreutz, Herman, FI-00950 Helsinki (FI); Laine-Ylijoki, Saija, FI-02200, Espoo (FI)
(74) Representative: Saijonmaa, Olli-Pekka

(57) **Abstract**

The invention relates to a functional food, which is a powdered mixture of plant-derived ingredients with various phyto-oestrogen-containing components. In addition, the invention relates to the use of such a food, Particularly, according to the invention, the food comprises isoflavone-containing soy flour and lignan-containing rye bran. As supplementation, flavour-contributing components, such as dried lingonberries of bilberries, or linseeds to make the lignan content higher, can be present. The powder is useful as a supplement added to a non-baked, ready-to-ingest food ingredient, for example as a drink when mixed in a liquid, or as a more solid mixture.

## Description

The object of the invention is a functional food for ingestion without being heated, which is a powdered mixture of ingredients of plant origin with components containing various phyto-oestrogens. In addition, the invention is directed to the use of such a food as a supplement to other foods.

Phyto-oestrogens are hormone-like compounds, found naturally in certain plants, which resemble oestrogens produced in a female body. Once ingested, the plant-derived phyto-oestrogens undergo transformations in the gut through fermentation promoted by the gut bacteria into compounds which have activities resembling partially those of the oestrogens produced in the body. In order to control the menopausal problems in women, such as the drying of mucous membranes and the so called hot flushes, efforts have been made to add phyto-oestrogens to foods as a replacement for the use of synthetic oestrogen drugs. In addition, phyto-oestrogens have been found to prevent the embrittlement of bone and to control depression.

The main types of phyto-oestrogens include isoflavones, the most important nutritional source thereof being soybean, as well as lignans, which are found in very high levels in linseeds and in marked amounts also in cereal grains, notably in rye. Experience concerning the positive effects of soy, which contains the iso-flavones daidzein and genistein, on the menopausal symptoms has been gained in countries where the diet is composed traditionally of large amounts of soy products. The lignans, such as secoisolarisiresinol and matairesinol, have been shown to be metabolized, like isoflavones, into hormone-like compounds in the gut, so that their health effects can be assumed to be alike, Based on these considerations, a large number of various health food products have been put into market having as key ingredients notably soybean but also linseeds and cereals. Because isoflavones and lignans, in spite of their common features, are clearly different as to their chemical structures, their sources are often combined into one and the same product in order to obtain a product having as broad action as possible. An example of such a product is a Powdered health food preparation described in Fl patent 107014, being ingestible as such, which is to be added as a Supplement to other foods, incorporating also, along with soy powder and lin-seeds, fructoolicosaccharide, which functions prebiotically, i.e. to promote the growth of gut bacteria.

The characteristics of linseeds include a naturally high fat content, and therefore the seeds incorporated into the product must be defatted to remove most of fats in order to ensure a good shelf life for the product. The advantage of cereals over linseeds is that their defatting is unnecessary.

Basically, in the functional food of the invention in a powder form, isoflavone-containing soy flour has been mixed with rye, which is as a lignan source, As with linseeds, also rye grains contain secoisolarisiresinol and matairesinol, which are concentrated in the hull and in the parts near the hull in kernel. Rye also contains at least 5 other lignans. The additional advantage of rye is its many known advantageous health effects, such as the preventive effects of its non-soluble fibres on cancer and heart disease, as well as the ready availability because of its widespread cultivation. In addition, rye lowers cholesterol and has an advantageous effect on sugar metabolism.

Research-based information concerning the lignans in rye and their behaviour in the metabolism of the human body has been described in Adlercreutz, H., Mazur, W, The Finnish Medical Society DUODECIM, AnnMed 29 (1997), pp, 95-120. According to it, the lignans in rye, secoisolarisiresinol and matairesinol, are glycosidic precursors, which are metabolized by enteric bacteria into mammalian lignans, enterolactone and enterodiol, which can be shown in urine. According to that publication, in female subjects after consumption of rye bread, the levels of enterolactone and enterodiol in urine increased manyfold even as compared to that what could be expected on the basis of the lignan content measured in rye grains. Based on this these workers made the assumption that rye contains, in addition to secoisolarisiresinol and matairesinol, also other precursors (preliminary stages), which are transformed into mammalian lignans in the gut. These new lignans have now been identified and it has been shown that these are found in highest amounts in rye as compared to the other cereals. This result represents a demonstration of rye as an important plant-derived lignan source.

Rye has been traditionally used for human nutrition in the form of rye bread. Scientists have assumed that the yeast used in baking, or baking of bread, makes higher the percentage in the bread of those rye lignans which are undergoing hydrolysis in the gut and are advantageous for the body, c. f. Glitsö et al., British Journal of Nutrition (2000), 84, pp. 429-437. For the same reason, rye grains have also been germinated in order to use the germinated grains either for the rye dough to be baked into bread or as such for nutritional preparations to be ingested in a non-heated form.

WO97/32593 describes a health biscuit baked from a dough into which soy, linseeds, and rye bran have been incorporated. The soy component of the biscuits releases genistein and daidzein into the body and linseeds and rye release enterolactone and/or enterodiol.

GB-patent 1219564 describes a mixture of nutritional ingredients with health effects, which contains partly germinated soybeans and partly germinated cereal grains, such as, for example, rye grains. The mixture is described to be used as a supplement to flour in bread baking.

From Fl-patent application 20010376A a powdered functional food is known, which is composed of a mixture containing pre-baked soy flour and germinated and dried rye. Heating of the product is unnecessary and is intended for use, for example, in drinks or as a supplement mixed in other foods.

Accordingly, the prevailing opinion up to now has been that rye, in order to be suitable for human food, needs to be baked, or heated in other such ways, or germinated, and, correspondingly, rye in the rye-containing products on the market, such as in bread and health foods, has been either baked in connection with baking, baked in other ways or germinated.

However, in known rye-containing health food products the baking of rye by heating, or its germination, form a separate processing step, the omission of which could essentially simplify the preparation of the product. The product of the invention, which overcomes the problem in question, is composed of a powdered mixture, which is to be ingested in a non-heated form, characterized by the fact that it contains isoflavone-containing pre-baked soy flour and lignan-containing rye bran.

Contrary to the prevailing opinion, the basic idea of the invention is that the lignans in rye bran are utilizable in the body to a marked extent without baking or other such processing to release lignans therefrom, This can be deduced from the experimental results in Landström et al., The Prostate (1998) 36, pp, 151-161, which have been obtained during a study of a potential anti-cancer effect of rye bran in rats, In the experiments the rats were fed with rye bran heated to 100°C or dried only at 40°C and the excretion of enterodiol and enterolactone in the urine of experimental animals was measured. According to the table VI-I in this publication the formation of erterolactone was slightly higher with the heated rye bran than with the unheated one, but the measured amount of the metabolized enterolactone with the latter one was also rather notable. Therefore, the assumption can be made that the use of unbaked rye bran in a health food product has a notable enterolactone-producing effect in the body.

The functional food of the invention is thus characterized by the fact that it comprises isoflavone-containing pre-baked soy flour and lignan-containing rye bran, Rye bran is the fraction produced in the milling of rye grains which includes lignan-containing parts of the kernel's hull, for which, according to the invention, baking or other heat processing to release the lignans is unnecessary.

The powdered product of the invention is useful without baking, for example, as drink mixed in water, milk product or juice, or as a supplement to be mixed with soup, joghurt, crispies, flakes, berries, or fruits, Besides phyto-oestrogens, its advantageousness as a food is based on its high fibre content, as well as its content of minerals and vitamins.

The lignan content of the product can be made higher by incorporating, besides rye bran, also crushed linseeds.

Dried bilberries or lingonberries can further be incorporated into the product of the invention as a flavour. These berries contain flavonoids, lignans and, in addition, vitamins and minerals.

Of the main components in the product the percentage of soy flour can be 30-80%, most preferably 40-60% and the percentage of rye bran can be 2-20%, most preferably 10-20%. Preferred, tasteful product compositions are obtained by mixing 40-60% soy flour, 2-20% rye bran, 0-15% dried bilberries, 0-15% dried lingonberries and 2-15% crushed linseeds.

As a flavouring and/or sweetener, aspartame, vanillin sugar and/or cacao powder can also be incorporated into the product of the invention. Due to its flavonoid content, cacao has also advantageous anti-oxidative and blood platelet-affecting activities.

As mentioned, the invention comprises also the use of the above described powdered product as a supplement to be added to another food ingredient. The powdered product can be mixed in a liquid, such as water, milk, sour milk, or juice, as a drink, or it can be added by mixing or spreading to a solid or semi-solid food ready to be ingested, such as soured whole milk, yoghurt porridge, soup, desserts, crispies, flakes, berries, or fruits.

The invention is illustrated below in detail with reference to some exemplary compositions of the functional food of the invention.

### Example 1

| | |
|---|---|
| Soy flour | 65% |
| Rye bran | 5% |
| Crushed linseeds | 8% |
| Bilberry fibre | 10% |
| Lingonberry fibre | 10% |
| Alterna soy extract | 2% |

### Example 2

| | |
|---|---|
| Soy flour | 65% |
| Rye bran | 10% |
| Crushed linseeds | 5% |
| Vanillin sugar | 5% |
| Defatted cacao | 10% |
| Merisant-aspartame preparation | 5% |

**Information on the ingredients of the exemplary compositions**

### Soy flour

- pre-baked by toasting (toasted)
- no residual enzymatic activity
- contains naturally lecithin (acts in the finished product as a natural emulsifying agent)
- energy content 1743 kJ / 416 g
- protein content 37%
- fat content 23%
   - saturated fatty acids 18.2%
   - monounsaturated fatty acids 18.2%
   - polyunsaturated fatty acids 63.6%
- carbohydrate content 27%
- ash 5%
- colour; light yellow

### Rye bran

- prepared from the outermost part of rye kernel which contains the vitamin-, mineral-, and fibre-containing layers
- coloured from green to brown
- content per 100 g of product
- energy: 850 kJ/200 kcal
- protein: 15 g
- carbohydrates: 26 g
- fat: 4.3 g
- food fibre: 39 g

### Lingonberry fibre powder

- prepared from 100% skin matter and seeds of lingonberries (fresh or frozen berries)
- energy content: 1873 kJ/100 g
- anthocyanines 0.71 g/100 g
- shelf life at least 15 months
- aroma and color natural aroma and color of berries

### Bilberry fibre powder

- prepared from 100% skin matter and seeds of bilberries (fresh or frozen berries)
- energy content: 1892 kJ/100 g
- anthocyanines 2.63 g/100 g
- shelf life at least 15 months
- aroma and color natural aroma and color of berries

### Crushed linseeds

- prepared from linseeds with most of oils removed (defatted)
- fat content 17%
- protein content 30%
- fibre content 32%

## Claims

1. A functional food, for ingestion without being heated, which is a powdered mixture of ingredients of plant origin with components containing various phyto-oestrogens, **characterized in that** the mixture comprises isoflavone-containing pre-baked soy flour, lignan-containing rye bran and dried bilberries and/or lingonberries.

2. The food of claim 1, **characterized in that** it also comprises crushed linseeds.

3. The food of claim 1 or 2, **characterized in that** it also comprises dried bilberries or lingonberries.

4. The food of any one the previous claims, **characterized in that** it comprises 30-80%, preferably 40-60% soy flour.

5. The food of any one of the previous claims, **characterized in that** it comprises 2-20%, preferably 10-20% rye bran.

6. The food of claims 4 and 5, **characterized in that** it comprises;
- 40-60% soy flour,
- 2-20% rye bran.
- 0-15% dried bilberries.
- 0-15% dried lingonberries.
- 2-15% crushed linseeds.

7. The use of a powdered mixture according to any one of the previous claims as a supplement to be mixed in another ready-to-ingest food ingredient.

8. The use of a the powdered mixture, according to claim 7, mixed in a drink.

9. The use of a powdered mixture, according to claim 7 or 8, mixed or sprinkled in a milk product, water, juice, porridge, soup, dessert, crisples, flakes, berries or fruits.
